# EUROPÄISCHE PATENTSCHRIFT

(11) **EP 3 391 432 B1**
(45) Veröffentlichungstag und Bekanntmachung des Hinweises auf die Patenterteilung: **06.01.2021**
(21) Anmeldenummer: 16797575.4
(22) Anmeldetag: 17.11.2016
(51) Int. Cl.: B60L 50/72, H01M 8/0202, H01M 8/0206, H01M 8/0247, H01M 2/14

(54) **VERFAHREN ZUR HERSTELLUNG EINER BIPOLARPLATTE**
METHOD FOR PRODUCING A BIPOLAR PLATE
PROCÉDÉ DE FABRICATION D'UNE PLAQUE BIPOLAIRE

(30) Priorität: 17.12.2015 DE 102015225536
(43) Veröffentlichungstag der Anmeldung: 24.10.2018
(73) Patentinhaber: Bayerische Motoren Werke Aktiengesellschaft, 80809 München (DE)
(72) Erfinder: HAASE, Stefan, 80807 München (DE)
(86) Internationale Anmeldenummer: PCT/EP2016/078024
(87) Internationale Veröffentlichungsnummer: WO 2017/102238

(56) Entgegenhaltungen:
- DE-A1-102006 038 173
- DE-A1-102009 059 767
- DE-A1-102013 206 789

## Beschreibung

Vorliegende Erfindung betrifft ein Verfahren zur Herstellung einer Bipolarplatte für einen Brennstoffzellenstapel.

In einem Brennstoffzellenstapel werden üblicherweise mehrere Bipolarplatten übereinandergestapelt. Die beiden Außenseiten der einzelnen Bipolarplatte bilden die Anodenseite und Kathodenseite der Brennstoffzelle. Hier betrachtete Bipolarplatten werden aus zwei Halbplatten zusammengesetzt. Die Halbplatten sind jeweils aus Blech geschnittene Bauteile. Die beiden Halbplatten sind durch Umformung profiliert, d.h. sie sind keine ebenen Bleche, sondern dreidimensionale Bauteile mit Erhebungen und Vertiefungen. Die Profilierung in den beiden Außenseiten der Bipolarplatte wird zum Verteilen der Reaktanden, beispielsweise Wasserstoff und Luft, verwendet. Des Weiteren können sich durch die Profilierung Hohlräume zwischen den beiden Halbplatten ergeben. Diese Hohlräume können ungenutzt bleiben oder beispielsweise zum Durchführen eines Kühlmediums und somit zum Kühlen der Bipolarplatte verwendet werden. Die einzelnen Halbplatten müssen an ihrem äußeren Umfang aus dem Blech geschnitten werden. Ferner müssen sogenannte Ports in die Bipolarplatten geschnitten werden. Beim Stapeln der mehreren Bipolarplatten zur einem Brennstoffzellenstapel fluchten die Ports und bilden somit Kanäle, die sich über alle Bipolarplatten erstrecken. Über diese Kanäle bzw. Ports werden die Reaktanden und gegebenenfalls Kühlmedien zu den einzelnen Bipolarplatten verteilt.

Die Druckschriften DE 10 2013 206789 A1, DE 10 2006 038173 A1 und DE 10 2009 059767 A1 gehören zum Stand der Technik.

Im Stand der Technik erfolgt das Schneiden der einzelnen Halbplatte oder der Bipolarplatte entweder mittels mechanischem Schneiden oder thermischem Trennen. Im Rahmen dieser Erfindung wird der Überbegriff "Schneiden" für beides, dass mechanische Schneiden und das thermische Trennen verwendet.

Nachteilig bei dem mechanischen Schneiden ist, dass es zu einer Verformung der profilierten Halbplatten kommen kann. Deshalb wird meist auf das thermische Trennen, insbesondere das Laserschneiden zurückgegriffen. Nachteilig beim Laserschneiden ist jedoch, dass der Laser nur auf eine Stelle fokussiert werden kann. Außerhalb des Fokus kommt es zu einer erhöhten Gratbildung.

Die beiden Halbplatten werden üblicherweise aufeinandergelegt und verschweißt. Beim Verschweißen muss, insbesondere nahe der Schweißnähte, eine ausreichende Fläche vorhanden sein, um die beiden Halbplatten gegeneinander zu drücken bzw. eine der Halbplatten niederzuhalten. Wenn jedoch die Halbplatten schon vollständig zugeschnitten sind, ist insbesondere im Bereich bestimmter Schweißnähte keine ausreichende Fläche mehr für das Drücken bzw. Niederhalten vorhanden.

Es ist Aufgabe vorliegender Erfindung, ein Verfahren zur Herstellung einer Bipolarplatte anzugeben, das eine effiziente, insbesondere schnelle, materialsparende und prozesssichere Herstellung ermöglicht.

Somit wird die Aufgabe gelöst durch ein Verfahren zur Herstellung einer Bipolarplatte für einen Brennstoffzellenstapel. Das Verfahren umfasst die folgenden Schritte:
(i) Zunächst erfolgt das bereitstellen zweier Halbplatten aus Blech. Das Blech ist insbesondere aus einem beliebigen Metall. Insbesondere ist vorgesehen, dass das erfindungsgemäße Verfahren nicht nur das Bereitstellen der Halbplatten sondern auch das Schneiden der Halbplatte aus dem Blech und/oder das Umformen des Blechs zur Herstellung der Profilierung umfasst.
   Die beiden Halbplatten sind derart ausgebildet, sodass sie im übereinandergelegten Zustand die Bipolarplatte ergeben. Die beiden Halbplatten sind profiliert. Die Profilierung der Halbplatte ist durch Umformung des Bleches erzeugt. Die "Profilierung" bedeutet, dass die Halbplatten keine ebenen Bleche, sondern dreidimensionale Bauteile mit Erhebungen und Vertiefungen sind.
   Im fertigen Zustand, wenn also die beiden Halbplatten entsprechend der gewünschten Bipolarplatte aufeinanderliegen, gibt es zumindest einen sogenannten Berührungsbereich und einen Nichtberührungsbereich der Bipolarplatte. Am Berührungsbereich liegen die beiden Halbplatten unmittelbar aufeinander und berühren sich gegenseitig. Am Nichtberührungsbereich verbleibt zwischen den beiden Halbplatten ein Hohlraum. Dieser Hohlraum innerhalb der Bipolarplatte kann ungenutzt bleiben oder beispielsweise zum Durchleiten eines Mediums genutzt werden.
(ii) Im Laufe des hier beschriebenen Verfahrens zur Herstellung der Bipolarplatte muss ein Schneiden der Halbplatten erfolgen. Dieses "Schneiden" umfasst insbesondere:
   - ein Herausschneiden der einzelnen Halbplatte aus dem Blech, und/oder
   - ein nachträgliches Zuschneiden der Halbplatte, beispielsweise an den Rändern der Halbplatte, und/oder
   - ein Herausschneiden von Material zur Ausbildung eines Ports, und/oder
   - ein Schneiden der fertigen Bipolarplatte nach dem Verbinden der beiden Halbplatten, und/oder
   - ein Herausschneiden von Durchströmungsgebieten durch eine der beiden Halbplatten.

   Im erfindungsgemäßen Verfahren ist vorgesehen, dass zumindest ein erster Schnitt im Nichtberührungsbereich zumindest einer der beiden Halbplatten erfolgt, noch bevor die beiden Halbplatten aufeinandergelegt und miteinander verbunden werden. Mit "erster Schnitt" werden hier alle Schnitte beschrieben, die gleichzeitig oder nacheinander im Nichtberührungsbereich, in jedem Fall jedoch vor dem Aufeinanderlegen und Verbinden der beiden Halbplatten erfolgen.
   Insbesondere in diesem Nichtberührungsbereich können die Halbplatten nach dem Aufeinanderlegen nur schlecht geschnitten werden. Im
   Nichtberührungsbereich sind nämlich die beiden Halbplatten nach dem Aufeinanderlegen voneinander beabstandet. Dies hat zur Folge, dass sich die Bipolarplatte beim mechanischen Schneiden verformt. Bei Verwendung des Laserschneidens, kann der Fokus nicht auf beide Halbplatten gleichzeitig gerichtet werden, da diese zu weit voneinander beabstandet sind. Dies wiederum hat eine erhöhte Gratbildung zur Folge.
(iii) Nach dem Durchführen des zumindest einen ersten Schnittes erfolgt das Aufeinanderlegen und Verbinden der beiden Halbplatten. Die beiden Halbplatten werden dabei insbesondere miteinander verschweißt und/oder verklebt und/oder verlötet.
(iv) Nach dem Aufeinanderlegen, vorzugsweise nach dem Verbinden, erfolgt zumindest ein zweiter Schnitt. Der zweite Schnitt wird durch beide Halbplatten im Berührungsbereich gesetzt. Für den zweiten Schnitt kann sowohl ein mechanisches Schneiden als auch ein thermisches Trennverfahren verwendet werden. Da der zweite Schnitt im Berührungsbereich erfolgt, liegen hier die beiden Halbplatten unmittelbar aufeinander auf. Es kommt somit zu keiner ungewollten Verformung der Bipolarplatte beim mechanischen Schneiden. Auch der Bereich für den Fokus beim Laserschneiden ist relativ stark eingegrenzt, da die Halbplatten im Berührungsbereich nicht voneinander beabstandet sind.

Im erfindungsgemäßen Verfahren ist vorgesehen, dass zumindest ein zweiter Schnitt im Berührungsbereich der beiden Halbplatten und durch beide Halbplatten hindurch erfolgt. Mit "zweiter Schnitt" werden hier alle Schnitte beschrieben, die gleichzeitig oder nacheinander im Berührungsbereich, in jedem Fall nach dem Aufeinanderlegen und Verbinden der beiden Halbplatten erfolgen.

Besonders bevorzugt ist vorgesehen, dass bei der Herstellung der Bipolarplatte nach dem Aufeinanderlegen und Verbinden der beiden Halbplatten ausschließlich im Berührungsbereich geschnitten wird.

Wie eingangs bereits beschrieben, weisen die Bipolarplatten üblicherweise zumindest einen Port auf. Stapelt man die Vielzahl an Bipolarplatten, um einen Brennstoffzellenstapel zu erhalten, so fluchten die entsprechenden Ports und bilden einen Kanal. Über die Kanäle werden die Reaktanden und gegebenenfalls Kühlmedien auf die einzelnen Bipolarplatten verteilt. Die hier beschriebene Vorgehensweise, mit dem Durchführen der ersten Schnitte im Nichtberührungsbereich und der zweiten Schnitte im Berührungsbereich wird insbesondere zum Herausschneiden der Ports verwendet. So ist bevorzugt vorgesehen, dass die Kontur eines einzelnen Ports durch zumindest einen ersten Schnitt und zumindest einen zweiten Schnitt geschnitten wird.

Beim Verbinden, insbesondere Schweißen, der beiden Halbplatten müssen die beiden Halbplatten gegeneinander gedrückt werden. Hierzu muss zumindest eine der Halbplatten auf der anderen Halbplatte niedergehalten werden.

Bei dem Drücken der beiden Halbplatten setzt ein entsprechendes Werkzeug an zumindest einem Drückbereich an. Bevorzugt ist vorgesehen, dass dieser Drückbereich durch den zweiten Schnitt abgetrennt wird. Nach der Durchführung des zweiten Schnittes ist der Drückbereich somit zumindest teilweise kein Bestandteil der Bipolarplatte mehr, sondern Abfall.

Insbesondere befindet sich der zumindest eine Drückbereich in dem zumindest einen Port, d.h. in dem Bereich, der zur Ausbildung des Ports herausgeschnitten wird. Die Schnitte zum Schneiden des Ports sind also bewusst so gesetzt, dass nach dem zumindest einen ersten Schnitt noch ausreichend Material für den Drückbereich zur Verfügung steht. Dieses Vorgehen ermöglicht relativ viel Spielraum bei der Gestaltung der Bipolarplatten. Insbesondere können die Abstände zwischen den Ports und die Ränder um die Ports äußerst schmal gestaltet werden, da diese Bereiche nicht mehr zwingend als Drückbereiche benötigt werden.

Für zumindest einen ersten Schnitt, insbesondere für alle ersten Schnitte ist bevorzugt das mechanische Schneiden vorgesehen. Das mechanische Schneiden ermöglicht eine schnelle, kostengünstige und prozesssichere Herstellung. Bevorzugt wird hier beim mechanischen Schneiden ein Abstützwerkzeug verwendet. Auf dem Abstützwerkzeug liegt die Halbplatte vollflächig auf. Hierzu ist das Abstützwerkzeug entsprechend der Profilierung der Halbplatte geformt. Dies bedeutet, dass das Abstützwerkzeug in Übereinstimmung mit dem Profil der Halbplatte Vertiefungen und Erhebungen aufweist. Lediglich in unmittelbarer Umgebung der ersten Schnitte weist das Abstützwerkzeug Schneidbereiche auf, in denen die Halbplatte nicht aufliegt. In diesen Schneidbereichen kann das entsprechende Schneidwerkzeug eindringen.

Durch das Verwenden des profilierten Abstützwerkzeugs wird eine ungewollte Verformung der profilierten Halbplatte beim mechanischen Schneiden vermieden.

Bevorzugt ist vorgesehen, dass das Umformen des Blechs zur Herstellung der Profilierung der Halbplatte und das mechanische Schneiden für den zumindest einen ersten Schnitt in einem gemeinsamen Werkzeug durchgeführt werden. Diese beiden Verfahrensschritte werden dabei insbesondere gleichzeitig, z.B. im Folgeverbund, durchgeführt. Bei dem Werkzeug handelt es sich insbesondere um ein kombiniertes Press- und Stanzwerkzeuge. Besonders bevorzugt kommt hier das profilierte Abstützwerkzeug zum Einsatz, um ein Verformen der Halbplatte beim mechanischen Schneiden zu vermeiden. Das profilierte Abstützwerkzeug kann gleichzeitig auch die Matrize für das Umformen und somit für die Herstellung der Profilierung in der Halbplatte bilden.

Zusätzlich oder alternativ zum mechanischen Schneiden des zumindest einen ersten Schnittes ist bevorzugt vorgesehen, dass zumindest ein erster Schnitt durch thermisches Trennen, vorzugsweise Laserschneiden, ausgeführt wird.

Des Weiteren ist bevorzugt vorgesehen, dass zumindest ein zweiter Schnitt durch mechanisches Schneiden ausgeführt wird. Zusätzlich oder alternativ ist bevorzugt vorgesehen, dass zumindest ein zweiter Schnitt durch thermisches Trennen, vorzugsweise Laserschneiden, ausgeführt wird.

Vorteilhaft ist, dass die Zuschnitte der beiden Halbplatten durch den individuellen ersten Zuschnitt unterschiedlich/unabhängig voneinander gestaltet sein können.

Die Erfindung umfasst des Weiteren einen Brennstoffzellenstapel umfassend eine Vielzahl an gestapelten Bipolarplatten. Die Bipolarplatten sind nach dem eben beschriebenen Verfahren hergestellt. Die im Rahmen des Verfahrens vorgestellten Unteransprüche und vorteilhaften Ausgestaltungen finden entsprechend vorteilhafte Anwendung auf dem Brennstoffzellenstapel.

Ferner umfasst die Erfindung ein Fahrzeug mit dem Brennstoffzellenstapel. Die mit dem Brennstoffzellenstapel gewonnene Energie wird vorzugsweise für den Vortrieb des Fahrzeugs verwendet.

Ferner umfasst die Erfindung ein Verfahren zum Schneiden einer profilierten Bipolarplatte für einen Brennstoffzellenstapel, wobei zumindest ein Schnitt durch mechanisches Schneiden ausgeführt wird, wobei die Halbplatte beim mechanischen Schneiden auf einem dem Profil der Halbplatte entsprechen geformten Abstützwerkzeug liegt, sodass die Halbplatte vollflächig auf dem Abstützwerkzeug abgestützt ist. Das Abstützwerkzeug kann dabei unabhängig von der weiteren Verarbeitung bzw. Montage der Bipolarplatte eingesetzt werden.

Weitere Einzelheiten, Merkmale und Vorteile der Erfindung ergeben sich aus der nachfolgenden Beschreibung und den Figuren. Es zeigen:
- Figur 1: eine Bipolarplatte gemäß einem Ausführungsbeispiel hergestellt nach dem erfindungsgemäßen Verfahren,
- Figur 2: eine Schnittansicht zu Figur 1,
- Figuren 3, 4: schematische Darstellungen für ein mechanisches Schneiden gemäß dem erfindungsgemäßen Verfahren.

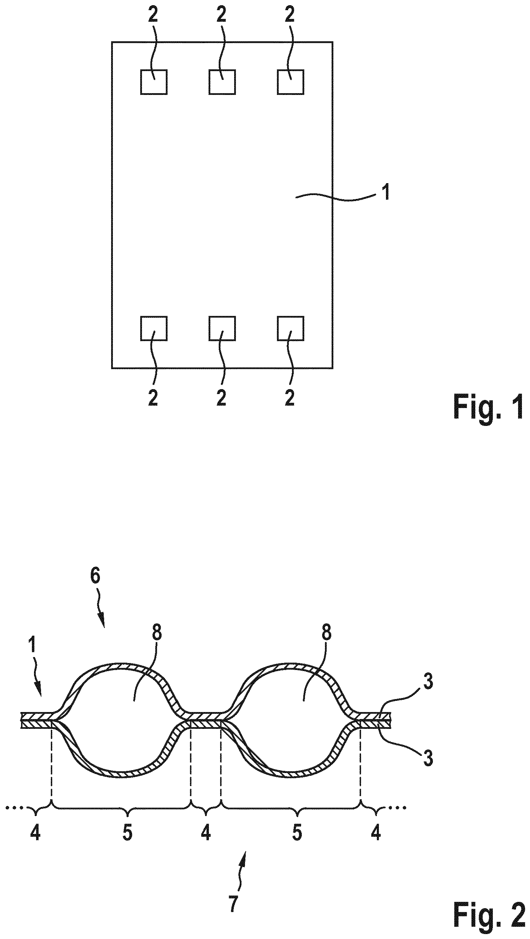

Anhand der Figuren 1 bis 4 wird ein erfindungsgemäßes Verfahren zur Herstellung einer Bipolarplatte 1 beschrieben. Die Figuren zeigen die Bipolarplatte 1 und die Verfahrensschritte schematisch vereinfacht.

Figur 1 zeigt die Bipolarplatte 1. Die Bipolarplatte 1 umfasst im oberen und unteren Bereich mehrere Ports 2 in Form von Ausnehmungen. Zur Herstellung eines Brennstoffzellenstapels werden mehrere der Bipolarplatten 1 gestapelt. Dabei fluchten die einzelnen Ports 2 und bilden dadurch Kanäle, im gezeigten Beispiel sechs Stück. Die Kanäle im Brennstoffzellenstapel werden zur Verteilung der Reaktanden und gegebenenfalls Kühlmedien zu den einzelnen Bipolarplatten 1 verwendet.

Figur 2 zeigt einen Detailschnitt durch die Bipolarplatte 1. Die Bipolarplatte 1 ist zusammengesetzt aus zwei Halbplatten 3. Zur Herstellung der Bipolarplatte 1 sind die beiden Halbplatten 3 ggf. miteinander verbunden, insbesondere verschweißt.

Die einzelnen Halbplatten 3 sind aus Blech und profiliert. Diese Profilierung der Halbplatten 3 ist durch eine Umformung des Blechs hergestellt. Die beiden Außenseiten der Bipolarplatte 1 bilden die Anodenseite 6 und Kathodenseite 7. Hier wird die Profilierung zur Führung und Verteilung der Reaktanden genutzt.

Die beiden Halbplatten 3 sind derart profiliert und übereinandergelegt, sodass sich Berührungsbereiche 4 und Nichtberührungsbereiche 5 ergeben. Im Nichtberührungsbereich 5 verbleibt ein Hohlraum 8 zwischen den beiden Halbplatten 3. Solch ein Hohlraum 8 kann ungenutzt bleiben oder für die Medienführung der Bipolarplatte genutzt werden.

Insbesondere Figur 2 zeigt das Profil der Bipolarplatte 1 stark vergrößert und vereinfacht. Tatsächlich kann die Profilierung der Halbplatten 3 sehr fein und komplex ausgestaltet sein. Der einzelne Port 2 beispielsweise kann sich über mehrere der Berührungsbereich 4 und Nichtberührungsbereich 5 erstrecken.

Wie bereits beschrieben, werden die einzelnen Halbplatten 3 noch vor dem Aufeinanderlegen und/oder Verbinden in dem Nichtberührungsbereich 5 geschnitten. Diese Schnitte werden als erste Schnitte 11 bezeichnet. Nach dem Verbinden der beiden Halbplatten 3 werden die Halbplatten 3 bzw. die Bipolarplatte 1 in dem Berührungsbereich 4 geschnitten. Diese Schnitte werden als zweite Schnitte 12 bezeichnet.

Vorzugsweise ist vorgesehen, dass nach dem Verbinden der beiden Halbplatten 3, zumindest zum Ausschneiden der Ports 2, ausschließlich zweite Schnitte 12, also Schnitte in dem Berührungsbereich 4, durchgeführt werden. Dadurch kann eine Verformung der Bipolarplatte 1 und/oder eine extreme Gratbildung vermieden werden.

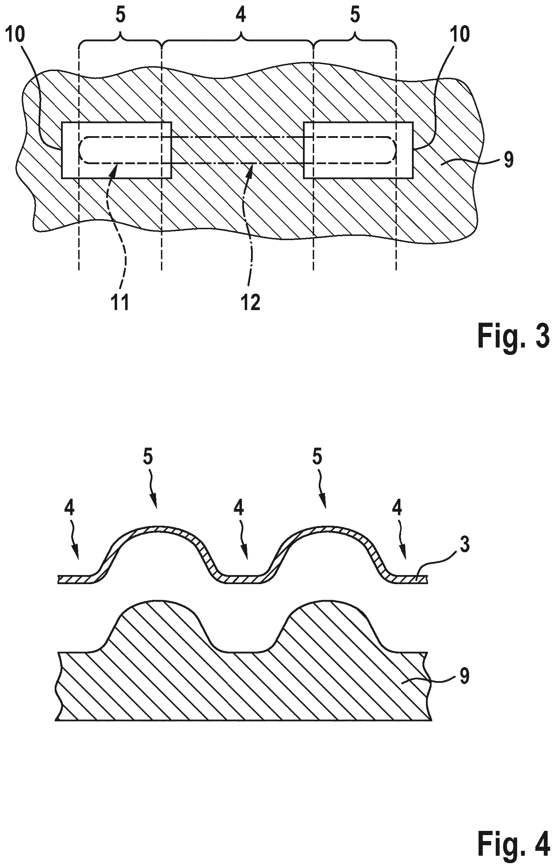

Figur 3 und 4 zeigen, wie an einer profilierten Halbplatte 3 ein mechanisches Schneiden der ersten Schnitte 11 durchgeführt werden kann. Hierzu wird ein profiliertes Abstützwerkzeug 9 verwendet. Das Abstützwerkzeug 9 entspricht in seiner Form der Profilierung der Halbplatte 3. Dadurch kann die Halbplatte 3 vollflächig auf dem Abstützwerkzeug 9 aufliegen.

Figur 3 zeigt eine schematische Draufsicht. Gestrichelt dargestellt ist die vollflächige Auflage der Halbplatte 3 auf dem Abstützwerkzeug 9. Lediglich unmittelbar um den ersten Schnitt 11 befindet sich ein Schneidbereich 10, in dem die Halbplatte 3 nicht vollflächig aufliegt. Dabei ist bevorzugt vorgesehen, dass die Halbplatte 3 vollumfänglich um den Schneidbereich 10 vollflächig auf dem Abstützwerkzeug 9 aufliegt. Dadurch können ungewollte Verformungen beim Durchführen des ersten Schnitts 11 weitestgehend vermieden werden.

Der in Figur 3 dargestellte zweite Schnitt 12 wird erst nach dem Aufeinanderlegen und Verbinden der beiden Halbplatten 3, beispielsweise durch mechanisches Schneiden oder thermisches Trennen durchgeführt.

Wie die schematische Schnittdarstellung in Figur 4 zeigt, befindet sich der Schneidbereich 10 und der erste Schnitt 11 in einem Nichtberührungsbereich 5 der Halbplatte 3. Nachdem die beiden Halbplatten 3 zusammengesetzt sind, kann solch ein Abstützwerkzeug 9 beim Setzen des ersten Schnitts 11 nicht mehr verwendet werden, da der Hohlraum 8 in diesem Zustand nicht mehr zugänglich ist.

Es ist auch möglich, nur an einer beiden Halbplatten 3 den ersten Schnitt 11 bzw. die ersten Schnitte 11 durchzuführen.

Ein profilierte Abstützwerkzeug 9 kann auch beim zweiten Schnitt 12 genutzt werden, z.B. wenn der erste Schnitt 11 nur an einer der beiden Halbplatten 3 erfolgt.

### Bezugszeichenliste:

- 1: Bipolarplatte
- 2: Ports
- 3: Halbplatten
- 4: Berührungsbereich
- 5: Nichtberührungsbereich
- 6: Anodenseite
- 7: Kathodenseite
- 8: Hohlräume
- 9: Abstützwerkzeug
- 10: Schneidbereich
- 11: erster Schnitt
- 12: zweiter Schnitt

## Patentansprüche

1. Verfahren zur Herstellung einer Bipolarplatte (1) für einen Brennstoffzellenstapel, umfassend die folgenden Schritte:
• Bereitstellen zweier Halbplatten (3) aus Blech, die übereinandergelegt die Bipolarplatte (1) ergeben,
o wobei die Halbplatten (3) durch Umformung des Bleches profiliert sind, und
o wobei sich die beiden übereinandergelegten Halbplatten (3) aufgrund der Profilierung an zumindest einem Berührungsbereich (4) berühren und an zumindest einem Nichtberührungsbereich (5) nicht berühren,
• Durchführen zumindest eines ersten Schnittes (11) im Nichtberührungsbereich (5) zumindest einer Halbplatte (3), bevor die Halbplatten (3) aufeinander gelegt und verbunden werden,
• Aufeinanderlegen und Verbinden der beiden Halbplatten (3), und
• Durchführen zumindest eines zweiten Schnittes (12) im Berührungsbereich (4) durch beide Halbplatten (3) nach dem Aufeinanderlegen, insbesondere nach dem Verbinden.

2. Verfahren nach Anspruch 1, **dadurch gekennzeichnet, dass** die Bipolarplatte (1) zumindest einen Port (2) aufweist, wobei die Kontur des einzelnen Ports (2) durch zumindest einen ersten Schnitt (11) und zumindest einen zweiten Schnitt (12) erzeugt wird.

3. Verfahren nach einem der vorhergehenden Ansprüche, **dadurch gekennzeichnet, dass** die beiden Halbplatten (3) beim Verbinden aufeinander gedrückt werden, wobei das Drücken an zumindest einem Drückbereich ansetzt, der durch den zweiten Schnitt (12) zumindestens teilweise abgetrennt wird.

4. Verfahren nach einem der vorhergehenden Ansprüche, **dadurch gekennzeichnet, dass** zumindest ein erster Schnitt (11) durch mechanisches Schneiden ausgeführt wird, wobei die Halbplatte (3) beim mechanischen Schneiden auf einem dem Profil der Halbplatte (3) entsprechen geformten Abstützwerkzeug (9) liegt, sodass die Halbplatte (3) vollflächig auf dem Abstützwerkzeug (9) abgestützt ist.

5. Verfahren nach einem der vorhergehenden Ansprüche, **dadurch gekennzeichnet, dass** das Umformen des Bleches für die Profilierung und ein mechanische Schneiden für den zumindest einen ersten Schnitt (11) in einem gemeinsamen Werkzeug, vorzugsweise gleichzeitig, durchgeführt werden.

6. Verfahren nach einem der vorhergehenden Ansprüche, **dadurch gekennzeichnet, dass** zumindest ein erster Schnitt (11) durch thermisches Trennen, vorzugsweise Laserschneiden, ausgeführt wird.

7. Verfahren nach einem der vorhergehenden Ansprüche, **dadurch gekennzeichnet, dass** zumindest ein zweiter Schnitt (12) durch mechanisches Schneiden ausgeführt wird und/oder zumindest ein zweiter Schnitt (12) durch thermisches Trennen, vorzugsweise Laserschneiden, ausgeführt wird.

## Claims

1. Method for producing a bipolar plate (1) for a fuel cell stack, comprising the following steps:
• providing two half-plates (3) made of sheet metal which result in the bipolar plate (1) when placed over one another,
o wherein the half-plates (3) are profiled by forming the sheet metal, and
o wherein, by virtue of the profiling, the two half-plates (3) placed over one another come into contact at at least one contact region (4) and do not come into contact at at least one noncontact region (5),
• carrying out at least one first cut (11) in the noncontact region (5) of at least one half-plate (3) before the half-plates (3) are placed onto one another and connected,
• placing the two half-plates (3) onto one another and connecting them, and
• carrying out at least one second cut (12) in the contact region (4) through both half-plates (3) after they have been placed onto one another, in particular after they have been connected.

2. Method according to Claim 1, **characterized in that** the bipolar plate (1) has at least one port (2), wherein the contour of the individual port (2) is produced by at least one first cut (11) and at least one second cut (12).

3. Method according to one of the preceding claims, **characterized in that** the two half-plates (3) are pressed onto one another during connection, wherein the pressure is applied at at least one pressing region which is at least partially severed by the second cut (12).

4. Method according to one of the preceding claims, **characterized in that** at least one first cut (11) is carried out by mechanical cutting, wherein, during the mechanical cutting, the half-plate (3) lies on a shaped supporting tool (9) which corresponds to the profile of the half-plate (3), with the result that the half-plate (3) is supported with full-surface contact on the supporting tool (9).

5. Method according to one of the preceding claims, **characterized in that** the forming of the sheet metal for the profiling and a mechanical cutting for the at least one first cut (11) are carried out in a common tool, preferably simultaneously.

6. Method according to one of the preceding claims, **characterized in that** at least one first cut (11) is carried out by thermal cutting, preferably laser cutting.

7. Method according to one of the preceding claims, **characterized in that** at least one second cut (12) is carried out by mechanical cutting and/or at least one second cut (12) is carried out by thermal cutting, preferably laser cutting.

## Revendications

1. Procédé de fabrication d'une plaque bipolaire (1) destinée à un empilement de piles à combustible, le procédé comprenant les étapes suivantes :
• fournir deux demi-plaques (3) en tôle qui donnent, une fois placées l'une sur l'autre, la plaque bipolaire (1),
∘ les demi-plaques (3) étant profilées par déformation de la tôle, et
∘ les deux demi-plaques superposées (3) étant en contact l'une avec l'autre au niveau d'au moins une zone de contact (4) et n'étant pas en contact l'une avec l'autre au niveau d'au moins une zone sans contact (5) en raison du profilage.
• réaliser au moins une première découpe (11) dans la zone sans contact (5) d'au moins une demi-plaque (3) avant de placer les demi-plaques (3) l'une sur l'autre et avant de les relier,
• placer les deux demi-plaques (3) l'une sur l'autre et les relier, et
• réaliser au moins une deuxième découpe (12) dans la zone de contact (4) à travers les deux demi-plaques (3) après les avoir placées l'une sur l'autre, notamment les avoir reliées.

2. Procédé selon la revendication 1, **caractérisé en ce que** la plaque bipolaire (1) comporte au moins un orifice (2), le contour de l'orifice individuel (2) étant généré par au moins une première découpe (11) et au moins une deuxième découpe (12).

3. Procédé selon l'une des revendications précédentes, **caractérisé en ce que** les deux demi-plaques (3) sont pressées l'une sur l'autre lors de la liaison, le pressage étant appliqué sur au moins une zone de pressage qui est au moins partiellement séparée par la deuxième découpe (12).

4. Procédé selon l'une des revendications précédentes, **caractérisé en ce qu'**au moins une première découpe (11) est réalisée par découpage mécanique, la demi-plaque (3) étant placée lors du découpage mécanique sur un outil de support (9), formé de façon à correspondre au profil de la demi-plaque (3), de sorte que la demi-plaque (3) soit supportée sur toute la surface de l'outil de support (9).

5. Procédé selon l'une des revendications précédentes, **caractérisé en ce que** la mise en forme de la tôle destinée au profilage et au découpage mécanique pour effectuer l'au moins une première découpe (11) est effectuée dans un outil commun, de préférence simultanément.

6. Procédé selon l'une des revendications précédentes, **caractérisé en ce qu'**au moins une première découpe (11) est effectuée par découpage thermique, de préférence au laser.

7. Procédé selon l'une des revendications précédentes, **caractérisé en ce qu'**au moins une deuxième découpe (12) est réalisée par découpage mécanique et/ou au moins une deuxième découpe (12) est réalisée par découpage thermique, de préférence au laser.
